# NOUVEAU FASCICULE DE BREVET EUROPEEN

(11) **EP 3 077 274 B2**
(45) Date de publication et mention de la décision concernant l'opposition: **04.01.2023**
(45) Mention de la délivrance du brevet: 20.02.2019
(21) Numéro de dépôt: 14854886.0
(22) Date de dépôt: 04.12.2014
(51) Int. Cl.: B62D 21/15, B60R 19/34

(54) **STRUCTURE D'ABSORPTION DE CHOCS POUR VÉHICULE AUTOMOBILE**
AUFPRALLSCHUTZSTRUKTUR FÜR EIN KRAFTFAHRZEUG
IMPACT ABSORBING STRUCTURE FOR A MOTOR VEHICLE

(30) Priorité: 06.12.2013 FR 1302847
(43) Date de publication de la demande: 12.10.2016
(73) Titulaire: Constellium Singen GmbH, 78224 Singen (DE); PSA Automobiles SA, 78300 Poissy (FR)
(72) Inventeur: LANGE, Christian, CH-8224 Löhningen (CH); REBUFFET, Olivier, F-38000 Grenoble (FR); KOPEC, Franck, F-78000 Versailles (FR); COIFFIER, Frédéric, 91310 Montlhery (FR); TERRILLON, Alexandre, F-27870 Châtillon-le-Duc (FR)
(74) Mandataire: Constellium - Propriété Industrielle
(86) Numéro de dépôt international: PCT/IB2014/003200
(87) Numéro de publication internationale: WO 2015/083011

(56) Documents cités:
- EP-A2- 1 977 935
- DE-A1-102006 038 674
- DE-A1-102007 011 385
- DE-A1-102009 034 094
- DE-A1-102011 117 933
- DE-A1-102011 118 327
- DE-A1-102012 007 233

## Description

L'invention concerne un dispositif d'absorption de chocs, plus particulièrement les moyens de fixation dudit dispositif d'absorption de chocs sur la structure (avant ou arrière) d'un véhicule automobile. Celle-ci comporte typiquement deux longerons formant un brancard, chaque longeron étant généralement constitué d'une pièce soudée sur toute sa longueur et servant de support à une poutre de pare-chocs. Dans les dispositifs d'absorption de chocs concernés par l'invention, un absorbeur de chocs, également appelé "crash-box", est intercalé entre les extrémités de chaque longeron et la poutre de pare-chocs, afin de protéger la structure du brancard en cas de choc à faible vitesse. Le crash-box est ici une pièce déformable associée à la poutre transversale du pare-chocs pour former un dispositif d'absorption de chocs à faible vitesse, appelé également "Crash Management System" (CMS).

En pratique, lors d'un choc frontal à une vitesse inférieure à quatre kilomètres/heure, le pare-chocs et les crash-boxes se déforment dans le domaine élastique et reprennent leur position initiale sans détérioration. Lors d'un choc à une vitesse supérieure à quatre kilomètres/heure, le pare-chocs et les crash-boxes subissent une déformation plastique qui permet d'absorber au moins en partie l'énergie du choc. Lorsque le choc s'effectue à une vitesse restant inférieure à quinze kilomètres/heure environ, l'énergie ainsi absorbée permet de préserver le reste de la structure du véhicule (seuil de réparabilité). Au-delà, lors de chocs à une vitesse supérieure à quinze kilomètres/heure, la structure du brancard est endommagée et les coûts de réparation qui en découlent sont élevés.

On connaît par de nombreux documents de l'art, tels que US 6003930, US2004/0201254, US 6258465, EP 1 041 165, EP 1 688 312, US2003/0207143, US2001/0037844, des crash-box qui présentent une partie profilée allongée dans le sens longitudinal qui se déforme par pliages successifs sous l'effet de l'effort de compression généré par le choc. Ce mode de déformation, appelé "bottelage" ou "bottellement" ("progressive folding" en anglais), est le résultat d'un ensemble de micro-instabilités qui entraînent la flexion locale des parois longitudinales de la partie profilée, lesquelles se déforment plastiquement en faisant apparaître des lobes régulièrement répartis. Avantageusement, la partie profilée est un profilé extrudé, typiquement en alliage d'aluminium, dont la section est conçue de telle sorte que le bottelage puisse se produire sur toute la longueur utile de ladite partie profilée et absorbe une grande partie de l'énergie cinétique. La forme et l'épaisseur de la section du profilé, la nature de l'alliage extrudé sont choisis pour obtenir un bottelage régulier en évitant qu'une instabilité majeure, de type flambage, conduise à la formation brutale d'une rotule (rotulage) par laquelle le profilé est rapidement plié et écrasé avant d'avoir pu absorber toute la quantité visée d'énergie cinétique.

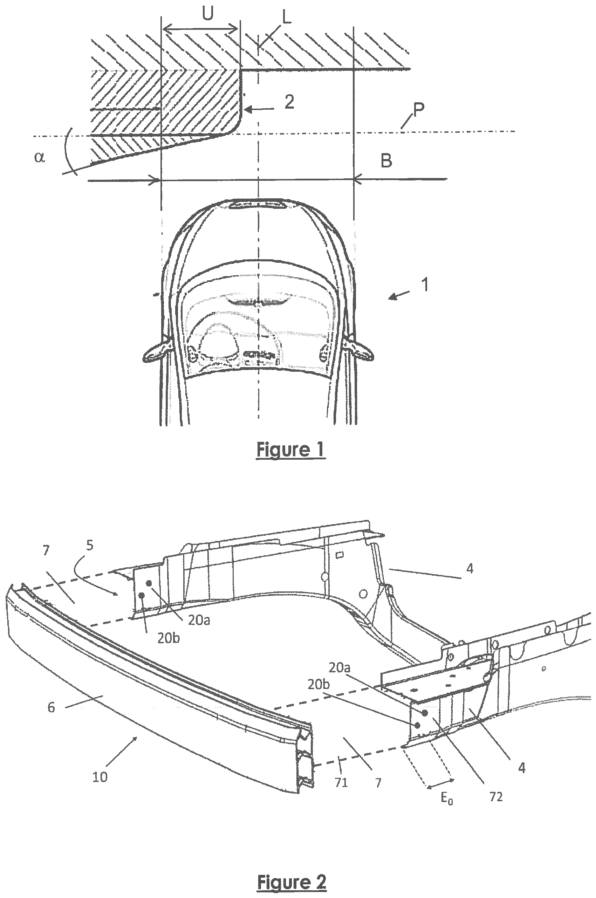

Des protocoles de "crash tests" ont été définis par les constructeurs automobiles et les assureurs afin d'améliorer les conditions de sécurité imposées aux véhicules. Initialement, ces tests simulaient des chocs frontaux, c'est-à-dire des chocs engendrant des efforts parfaitement longitudinaux. Récemment, ces "crash tests", notamment Euro-NCAP ou RCAR , suivent un protocole (cf. par exemple "RCAR Low-speed structural crash test protocol" - Issue 2.2 July 2011) dans lequel le choc n'est plus parfaitement frontal mais décalé: comme illustré sur la figure 1, le véhicule (1) soumis au test est projeté contre un mur (2) placé du côté du conducteur de telle sorte qu'il offre un obstacle sur plus de 40% de la largeur du véhicule (U > 0,4 * B) et fait un angle (α) de 10° par rapport à la perpendiculaire (P) à l'axe longitudinal (L) du véhicule.

Les nouveaux protocoles d'essais de chocs EuroNCAP et RCAR imposent des chocs qui ne sont plus purement frontaux mais impliquent la présence d'efforts transversaux et de couples agissant sur l'absorbeur. Les nouvelles conditions de ces tests augmentent le risque d'instabilité élastique de type flambage de l'absorbeur. Lorsque le flambement se traduit par un pivotement de l'absorbeur dans un plan horizontal, on parle de « mise en biais ». Lorsque le flambement se traduit par un pivotement de l'absorbeur dans un plan vertical, on parle de « verticalisation ».

En général, comme il est illustré dans de nombreux documents, tels que GB2304651, EP0734908, WO97/03865, EP0894675, US2002/0113447, US6003930 et EP1688312, l'extrémité de l'absorbeur est munie d'une platine transversale, laquelle est fixée sur une platine transversale solidaire de la structure (avant ou arrière) du véhicule. La demande de brevet européen EP 1 717 107 se distingue de l'art antérieur en décrivant un absorbeur qui est fixé sur le longeron après avoir été inséré partiellement à l'intérieur de la cavité dudit longeron, lequel se présente sous la forme d'un profilé creux. L'absorbeur présente une première extrémité sur laquelle est fixée la poutre transversale du pare-chocs et une deuxième extrémité qui est insérée à l'intérieur de la cavité du longeron. Une fois insérée sur une longueur EO sensiblement égale à une dimension caractéristique de la section transversale de l'absorbeur, par exemple le diamètre du cercle circonscrit de ladite section transversale, cette deuxième extrémité est fixée sur le longeron avec des moyens de fixation qui solidarisent les parois longitudinales en vis-à-vis du crash-box et du longeron. Ces moyens de fixation sont typiquement des boulons traversant lesdites parois longitudinales en vis-à-vis du crash-box et du longeron. La demande de brevet EP 1 977 935 A2 divulgue une crashbox ayant une section compressible dans une direction longitudinale, et un élément de fixation pour fixation à une poutre longitudinale d'une structure de châssis.

L'insertion de l'extrémité de l'absorbeur à l'intérieur du longeron, telle que proposée dans EP 1 717 107, a l'avantage sur les solutions antérieures, qui consistaient à fixer l'absorbeur sur le longeron à l'aide d'une platine transversale, de diminuer le risque de flambement de l'absorbeur en cas de choc. Cependant, les tests ont évolué et sont devenus plus sévères, par l'introduction d'efforts latéraux et/ou dissymétriques au cours du choc. Ces efforts augmentent fortement les risques de mise en biais et de verticalisation du crash-box lors d'un choc. Le document DE 102012007233 qui divulgue une structure d'absorption de chocs d'après le préambule de la revendication 1, montre également l'insertion de l'absorbeur à l'intérieur du longeron et montre en plus l'utilisation d'un élément de fixation inséré à l'intérieur du longeron.

Le but de la présente invention est de trouver des conditions de fixation d'un tel absorbeur qui permettent de diminuer sensiblement les risques de mise en biais et de verticalisation, en particulier lors de chocs mettant en oeuvre des efforts latéraux.
Un premier objet de l'invention est une structure d'absorption de chocs pour un véhicule dont la structure comporte au moins un longeron destiné à supporter une poutre transversale de pare-chocs, ledit longeron étant un profilé creux orienté selon l'axe longitudinal dudit véhicule et présentant au moins deux parois longitudinales opposées, ladite structure d'absorption de chocs comprenant :
1. a. ladite poutre transversale de pare-chocs ;
2. b. au moins un absorbeur placé entre ledit longeron et ladite poutre transversale de pare-chocs, ledit absorbeur étant un profilé creux destiné à se déformer lors d'un choc, présentant au moins deux parois longitudinales opposées, une extrémité dudit profilé étant destinée à être insérée à l'intérieur de l'extrémité ouverte dudit longeron de telle sorte que lesdites parois longitudinales opposées dudit absorbeur arrivent en vis-à-vis et à proximité desdites parois longitudinales opposées du longeron, ladite extrémité dudit profilé étant fixée audit longeron à l'aide de moyens de fixation, typiquement des ensembles boulons + écrous, orientés transversalement, perpendiculairement auxdites parois longitudinales opposées de l'absorbeur et du longeron,
3. c. un insert de fixation muni de faces opposées qui, lorsque ledit insert de fixation est inséré à l'intérieur dudit absorbeur, arrivent en vis-à-vis et à proximité desdites parois longitudinales opposées de l'absorbeur,
caractérisée en ce que chacune desdites faces opposées de l'insert est munie seulement de deux cavités transversales orientées perpendiculairement auxdites faces opposées, destinées à coopérer avec lesdits moyens de fixation, et décalées l'une de l'autre à la fois dans le sens longitudinal et dans le sens transversal perpendiculaire à la direction de l'axe desdites cavités transversales.

En général, la structure avant d'un véhicule automobile comprend un brancard comportant deux longerons qui supportent ensemble une poutre de pare-chocs. La structure d'absorption de chocs ou CMS résulte de l'assemblage de ladite poutre de pare-chocs et de deux absorbeurs qui servent d'éléments intermédiaires entre la poutre pare-chocs et les longerons. La structure d'absorption de chocs est positionnée sur la structure avant (ou arrière) du véhicule de telle sorte que chaque absorbeur se trouve intercalé entre un longeron et ladite poutre transversale de pare-chocs. L'absorbeur est donc à la fois un élément par lequel la poutre transversale de pare-chocs est fixée sur la structure avant du véhicule et un élément déformable conçu pour absorber une certaine quantité d'énergie cinétique en cas de choc.

L'absorbeur utilisé dans le cadre de l'invention est un profilé creux semblable à celui décrit dans EP 1 717 107, présentant des parois longitudinales opposées qui, lorsqu'il est inséré à l'intérieur du longeron, se trouvent en vis-à-vis et à proximité de parois longitudinales opposées dudit longeron. Lorsqu'il est fixé sur la structure avant (ou arrière) du véhicule, il est orienté selon l'axe longitudinal dudit longeron, une de ses extrémités étant insérée à l'intérieur de l'extrémité ouverte dudit longeron et fixée à celle-ci à l'aide de moyens de fixation, typiquement des vis ou des boulons munis d'écrous qui sont orientés transversalement, perpendiculairement auxdites parois longitudinales en vis-à-vis de l'absorbeur et du longeron. Lesdites parois longitudinales en vis-à-vis de l'absorbeur et du longeron sont mises en contact et solidarisées par vissage ou par serrage d'écrous sur des boulons qui traversent de part en part le longeron et l'absorbeur.

Selon l'invention, la structure d'absorption de chocs comprend également un insert de fixation destiné à être inséré à l'intérieur de l'absorbeur en vue de coopérer avec lesdits moyens de fixation. Dans ce but, l'insert comprend deux faces opposées, qui, lorsque l'insert est inséré à l'intérieur de l'absorbeur, se trouvent en vis-à-vis et à proximité de parois longitudinales opposées dudit absorbeur. Ces faces opposées sont destinées à servir d'appuis internes contre lesquels viennent buter les parois longitudinales opposées de l'absorbeur, celles-ci étant entraînées, avec les parois longitudinales opposées du longeron, en direction desdits appuis lorsque des écrous sont vissés sur lesdits boulons.

Selon l'invention, chacune des faces opposées de l'insert est munie de deux cavités transversales orientées perpendiculairement auxdites faces opposées, destinées à coopérer avec lesdits moyens de fixation, et décalées l'une de l'autre à la fois dans le sens longitudinal et dans le sens transversal perpendiculaire à la direction de l'axe desdites cavités transversales. Ces cavités transversales sont soit des cavités munies d'un filet de vissage, soit des alésages destinés au passage de boulons qui traversent de part en part le longeron, l'absorbeur et l'insert. De préférence, les cavités transversales de l'une des faces opposées sont dans l'alignement des cavités transversales de l'autre des faces opposées. Dans certaines modalités de l'invention, les cavités transversales alignées se rejoignent pour former un alésage traversant l'insert de l'une à l'autre des faces opposées.

Le nombre et la disposition des cavités transversales sur chacune des faces opposées de l'insert, qui détermine la disposition spatiale des moyens de fixation, est un paramètre important qui influe sur la tenue au flambage de l'absorbeur, en particulier lors de chocs décalés. Si, comme dans certains modes de réalisation de EP 1 717 107, on utilise plusieurs inserts, chacun de ces inserts étant muni d'une seule cavité transversale, on constate que, malgré le rôle d'appui joué par les inserts, le risque de verticalisation ou de mise en biais reste élevé. Cela est probablement lié, au moins en partie, au fait que chaque insert a un comportement indépendant.

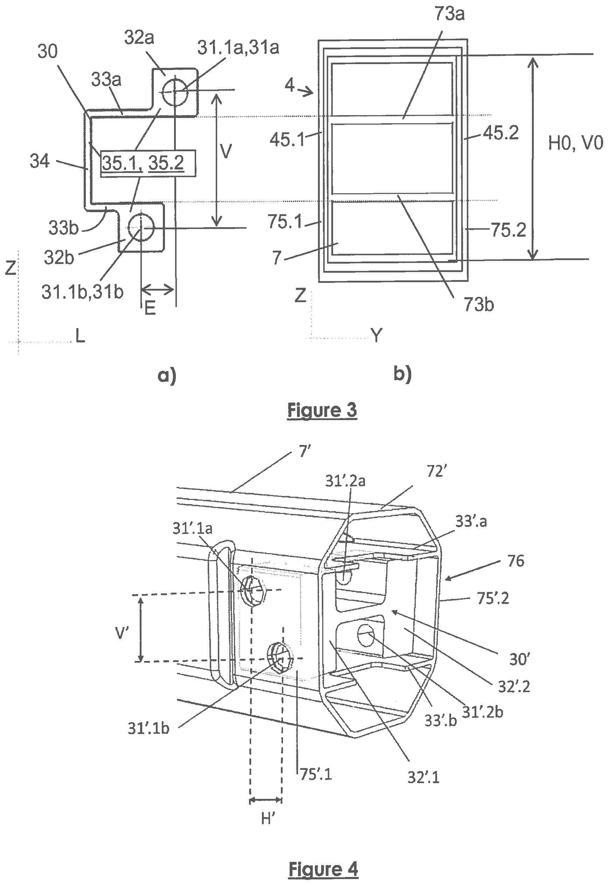

En utilisant non pas plusieurs inserts comme dans EP 1 717 107, mais un insert unique muni desdites cavités transversales, on obtient de meilleurs résultats, mais ceux-ci ne sont significativement meilleurs que si le plan défini par les axes des cavités transversales de chaque face n'est ni parallèle ni perpendiculaire à la direction longitudinale. En se reportant à la figure 3a, où l'on désigne par E la composante suivant la direction longitudinale (L) du décalage entre les deux cavités transversales de l'insert et par V la composante de ce même décalage suivant la direction transversale (Z) perpendiculaire à la direction (Y) de l'axe des cavités transversales, E et V doivent être strictement supérieures à 0. De préférence, ces composantes sont les plus grandes possibles, compatibles avec les contraintes géométriques imposées.

Avantageusement, la longueur d'enfoncement E0 de l'extrémité de l'absorbeur dans le longeron est au moins égale à une dimension caractéristique de la section transversale de l'absorbeur, par exemple le rayon du cercle circonscrit de ladite section transversale ou la moitié de la plus grande dimension de ladite section (la moitié de sa longueur si elle est sensiblement rectangulaire). La composante E selon la direction longitudinale du décalage entre les deux cavités transversales de l'insert est de préférence supérieure à E0/4, de préférence encore supérieure à E0/3.

De préférence, lesdites parois longitudinales opposées de l'absorbeur sont associées à la plus grande dimension V0 de la section dudit absorbeur pour maximiser la surface de contact entre les parois opposées du longeron et les parois opposées de l'absorbeur. Dans ces conditions, la direction transversale perpendiculaire à l'axe des cavités transversales est la direction de la plus grande dimension de la section. La composante V selon la direction transversale perpendiculaire à l'axe des cavités transversales du décalage entre les deux cavités transversales de l'insert est de préférence supérieure à V0/4, de préférence encore supérieure à V0/2. Comme il a été indiqué plus haut, E0 est de préférence supérieur à V0/2, de sorte que la composante E selon la direction longitudinale du décalage entre les deux cavités transversales de l'insert est de préférence supérieure à V0/8, de préférence encore supérieure à V0/6.

Dans les modes préférés de l'invention, la plus grande dimension V0 de la section de l'absorbeur est orientée verticalement et lesdites parois longitudinales opposées de l'absorbeur sont des parois verticales qui s'étendent sur une hauteur sensiblement égale à la hauteur hors-tout (H0) de l'absorbeur. Dans ce cas, la direction de l'axe des cavités transversales est horizontale et perpendiculaire à la direction longitudinale. L'enfoncement E0 étant de préférence supérieur à H0/2, la composante selon la direction longitudinale du décalage entre les deux cavités transversales de l'insert est de préférence supérieure à H0/8, de préférence encore supérieure à H0/6, voire H0/4. Avantageusement, la composante selon la direction transversale verticale (qui est perpendiculaire à la direction horizontale de l'axe des cavités transversales) du décalage entre les deux cavités transversales de l'insert est supérieure à H0/4, de préférence encore H0/2.

Dans les modes de réalisation décrits ci-après, les cavités transversales de l'une des faces opposées sont alignées avec les cavités transversales de l'autre des faces opposées. Ce sont soit des cavités munies d'un filet de vissage destiné à coopérer avec des vis, soit des alésages destinés au passage de boulons qui traversent de part en part le longeron, l'absorbeur et l'insert.

Dans un premier mode de réalisation, l'insert comprend des zones massives qui entourent lesdites cavités transversales, s'étendent de l'une à l'autre desdites faces opposées et qui sont reliées entre elles par une paroi mince. L'absorbeur est un profilé creux qui comprend trois chambres séparées les unes des autres par deux voiles internes horizontaux. La paroi mince de l'insert a la forme d'un U couché dont les ailes ne sont pas égales, qui comprend deux portions de paroi horizontales reliées entre elle par une portion de paroi verticale. Lors de l'insertion de l'insert à l'intérieur de l'absorbeur, les portions de parois horizontales viennent au regard desdits voiles internes horizontaux de sorte que la paroi mince en U chevauche les deux voiles internes horizontaux de l'absorbeur et l'insert est enfoncé jusqu'à ce que la portion verticale arrive en butée contre lesdits voiles. La fixation de l'absorbeur sur le longeron se fait soit par vissage (les cavités transversales sont alors des cavités munies d'un filet de vissage) soit par boulonnage (les cavités transversales sont alors des alésages traversants permettant le passage des boulons au travers de l'ensemble longeron-absorbeur-insert). On obtient ainsi un assemblage stable, grâce auquel la fixation de l'absorbeur sur le longeron assure des conditions proches de l'encastrement, permettant de diminuer sensiblement les risques de mise en biais et de verticalisation dudit absorbeur lors d'un choc dévié.

Dans un deuxième mode de réalisation, l'insert comprend deux zones massives opposées, chaque zone massive comprenant une desdites faces opposées. Les cavités transversales sont soit des cavités munies d'un filet de vissage, soit des alésages alignés traversant chacun l'une desdites zones massives. La fixation de l'absorbeur sur le longeron se fait soit par vissage soit par boulonnage. On obtient également un assemblage stable permettant de diminuer sensiblement les risques de mise en biais et de verticalisation dudit absorbeur lors d'un choc dévié.
La figure 1 illustre une vue de dessus représentant les conditions d'essais relatives à un test de choc sensiblement frontal, décalé (figure tirée de "RCAR Low-speed structural crash test protocol (Appendix I)").
La figure 2 représente une vue en perspective d'une structure avant de véhicule munie d'une structure d'absorption de chocs selon l'invention.
La figure 3a représente un premier mode de réalisation de l'insert utilisé dans la structure d'absorption de chocs selon l'invention, l'insert étant vu suivant la direction transversale des cavités. La figure 3b, représente la section transversale du longeron et de l'absorbeur à l'intérieur duquel l'insert illustré en 3a est destiné à être inséré.
La figure 4 représente un deuxième mode de réalisation de l'insert utilisé dans la structure d'absorption de chocs selon l'invention.

### MODES DE REALISATION DE L'INVENTION

La structure avant de véhicule illustrée en figure 2 comprend un mode de réalisation particulier de la structure d'absorption de chocs (10) selon l'invention. Elle comprend un brancard (2) comportant deux longerons (4) qui supportent ensemble une poutre de pare-chocs (6). La structure d'absorption de chocs ou CMS résulte de l'assemblage de ladite poutre de pare-chocs et de deux absorbeurs (7). Elle est positionnée sur la structure avant du véhicule de telle sorte que chaque absorbeur se trouve intercalé entre un longeron et ladite poutre de pare-chocs.

L'absorbeur est un profilé dont une extrémité est solidaire de la poutre pare-chocs et l'autre extrémité (72) est insérée à l'intérieur de l'extrémité ouverte (5) du longeron (4) sur une longueur E0, au moins égale à la moitié de la plus grande dimension de la section de l'absorbeur. Le profilé présente une partie utile (71), qui n'est insérée ni dans ledit longeron ni dans ladite poutre pare-chocs et qui est destinée à botteler sous l'effet d'un choc sensiblement frontal.

Après insertion, ladite extrémité (72) est fixée à celle-ci à l'aide de boulons horizontaux (20a, 20b) qui traversent de part en par le longeron et l'absorbeur.

### EXEMPLE 1 (Figure 3)

Le longeron (4) est un profilé creux présentant deux parois longitudinales verticales opposées (45.1 et 45.2).

L'absorbeur (7) est un profilé extrudé présentant deux parois longitudinales verticales opposées (75.1 et 75.2). Sa section a une forme externe rectangulaire, dont la plus grande dimension V0 correspond à la hauteur H0. Lorsque l'extrémité (72) de l'absorbeur (7) est insérée à l'intérieur de l'extrémité ouverte du longeron, les parois longitudinales opposées (75.1 et 75.2) de l'absorbeur arrivent respectivement en vis-à-vis et à proximité desdites parois longitudinales opposées (45.1 et 45.2) du longeron.

L'insert de fixation (30) est muni de faces opposées (35.1 et 35.2) qui, lorsque ledit insert de fixation est inséré à l'intérieur de l'absorbeur (7), arrivent respectivement en vis-à-vis et à proximité des parois longitudinales opposées (75.1 et 75.2) de l'absorbeur.

Chaque face de l'insert (30) est munie de deux cavités transversales (31.1a, 31.1b) alignées avec les cavités transversales de l'autre face et qui se joignent avec celles-ci pour former des alésages traversants (31a) et (31b) destinés à servir de guide à des boulons qui les traversent de part en part. Ces cavités sont orientées perpendiculairement aux faces opposées (35.1 et 35.2). Elles sont décalées l'une de l'autre à la fois dans le sens longitudinal (L) et dans le sens vertical (Z), qui est le sens transversal perpendiculaire à la direction (Y) de l'axe desdites cavités transversales.

L'extrémité (72) de l'absorbeur (7) a été insérée dans la cavité (5) du longeron (4) sur une longueur correspondant à 2*H0/3. La composante E selon la direction longitudinale du décalage entre les deux cavités transversales (31.1a) et (31.1b) de l'insert (30) est égale à 0,17*H0. La composante V selon la direction verticale (direction transversale perpendiculaire à l'axe des cavités transversales) du décalage entre les deux cavités transversales (31a) et (31b) de l'insert (30) est égale à 2*H0/3.

L'insert (30) comprend des zones massives (32a, 32b) qui s'étendent autour des alésages transversaux (31a, 31b) sur toutes leurs longueurs et qui sont reliées entre elles par une paroi mince (33a + 34 + 33b). L'absorbeur est un profilé creux qui comprend trois chambres séparées les unes des autres par deux voiles internes horizontaux (73a et 73b).

La paroi mince de l'insert a la forme d'un U couché dont les ailes ne sont pas égales, qui comprend deux portions de paroi horizontales (33a et 33b) reliées entre elle par une portion de paroi verticale (34). Lors de l'insertion de l'insert (30) à l'intérieur de l'absorbeur (7), les portions de parois horizontales (33a et 33b) viennent au regard desdits voiles internes horizontaux (73a et 73b) de sorte que la paroi mince en U chevauche les deux voiles internes horizontaux de l'absorbeur. L'insert (30) est enfoncé jusqu'à ce que la portion verticale (34) arrive en butée contre lesdits voiles interne horizontaux. En effectuant un léger pincement, c'est-à-dire en rendant les portions de paroi horizontales (33a et 33b) légèrement convergentes, l'insert (30), une fois inséré à l'intérieur de l'absorbeur (7), peut être maintenu en place sur l'extrémité (72) de l'absorbeur (7).

Afin de fixer l'absorbeur (7) sur le longeron (4), des boulons (20a et 20b) traversent de part en part ledit longeron et ledit absorbeur en passant par lesdits alésages transversaux (31a, 31b). Lors du serrage des écrous sur les boulons, les parois longitudinales opposées en vis-à-vis de l'absorbeur (75.1 et 75.2) et du longeron (45.1 et 45.2) sont mises en contact et entraînées vers les faces opposées (35.1 et 35.2) de l'insert, lesquelles font office de butée et de contre-appui. La fixation peut être complétée par l'emploi de vis verticales non traversantes. On obtient ainsi un assemblage stable, qui assure des conditions proches de l'encastrement, lesquelles permettent de diminuer sensiblement les risques de mise en biais et de verticalisation dudit absorbeur lors d'un choc décalé.

### EXEMPLE 2 (Figure 4)

L'absorbeur (7') est un profilé extrudé de section octogonale présentant deux parois longitudinales verticales opposées (75'.1 et 75'.2).

L'insert (30') comprend deux zones massives opposées (32'.1 et 32'.2), chaque zone massive (32'.1, resp. 32'.2) comprenant une des faces opposées (35'.1, resp. 35'.2). Les faces opposées (35'.1 et 35'.2), lorsque ledit insert de fixation est inséré à l'intérieur de l'absorbeur (7'), arrivent respectivement en vis-à-vis et à proximité des parois longitudinales opposées (75'.1 et 75'.2) de l'absorbeur.

Chaque face (35'.1, 35'.2) de l'insert (30') est munie de deux cavités transversales (31'.1a, 31'.1b) en alignement avec les cavités transversales (31'.2a, 31'.2b) de l'autre face, formant deux couples d'alésages destinés à servir de guide à des boulons qui les traversent de part en part. Ces cavités transversales sont orientées perpendiculairement aux faces opposées (35'.1 et 35'.2). Elles sont décalées l'une de l'autre à la fois dans le sens longitudinal et dans le sens vertical, qui est le sens transversal perpendiculaire à la direction de l'axe desdites cavités transversales.

En désignant par H0 la hauteur hors-tout de la section de l'absorbeur (7'), la composante V' selon la direction verticale (direction transversale perpendiculaire à l'axe des cavités transversales) du décalage entre les deux cavités transversales est égale à 0,3*H0. La composante E' selon la direction longitudinale du décalage entre les deux cavités transversales est égale à H0/8.

## Revendications

1. Structure d'absorption de chocs (10) pour un véhicule dont la structure comporte au moins un longeron (4) destiné à supporter une poutre transversale de pare-chocs (6), ledit longeron étant un profilé creux orienté selon l'axe longitudinal dudit véhicule et présentant aux moins deux parois longitudinales opposées (45.1 et 45.2), ladite structure d'absorption de chocs comprenant :
a. ladite poutre transversale de pare-chocs,
b. au moins un absorbeur (7) placé entre ledit longeron et ladite poutre transversale de parechocs, ledit absorbeur étant un profilé creux destiné à se déformer lors d'un choc, présentant au moins deux parois longitudinales opposées (75.1 et 75.2), une extrémité (72) dudit profilé étant destinée à être insérée à l'intérieur de l'extrémité ouverte (5) dudit longeron de telle sorte que lesdites parois longitudinales opposées dudit absorbeur arrivent en vis-à-vis et à proximité desdites parois longitudinales opposées du longeron, ladite extrémité dudit profilé étant fixée audit longeron à l'aide de moyens de fixation (20a, 20b) orientés transversalement, perpendiculairement aux dites parois longitudinales opposées de l'absorbeur et du longeron,
c. un insert de fixation (30) muni de faces opposées (35.1 et 35.2) qui, lorsque ledit insert de fixation est inséré à l'intérieur dudit absorbeur, arrivent en vis-à-vis et à proximité desdites parois longitudinales opposées de l'absorbeur,
**caractérisée en ce que**
chacune desdites faces opposées de l'insert est munie seulement de deux cavités transversales (31.1a et 31.1b) orientées perpendiculairement auxdites faces opposées (35.1 et 35.2), destinées à coopérer avec lesdits moyens de fixation, et décalées l'une de l'autre à la fois dans le sens longitudinal (L) et dans le sens transversal (Z) perpendiculaire à la direction (Y) de l'axe desdites cavités transversales.

2. Structure d'absorption de chocs selon la revendication 1, **caractérisée en ce que** lesdites cavités transversales sont soit des cavités munies d'un filet de vissage, soit des alésages destinés au passage de boulons qui traversent de part en part le longeron, l'absorbeur et l'insert.

3. Structure d'absorption de chocs selon la revendication 1 ou 2, **caractérisée en ce que** les cavités transversales de l'une desdites faces opposées sont alignées avec les cavités transversales de l'autre desdites faces opposées.

4. Structure d'absorption de chocs selon la revendication 3, dans laquelle lesdites cavités transversales alignées se rejoignent pour former un alésage traversant l'insert de l'une à l'autre desdites faces opposées.

5. Structure d'absorption de chocs selon l'une quelconque des revendications 1 à 4, où la section transversale dudit absorbeur présente une plus grande dimension V0,**caractérisée en ce que** la composante E du décalage selon la direction longitudinale (L) entre lesdites cavités transversales dudit insert est supérieur à E0/4, de préférence encore supérieure à E0/3, où E0 est la longueur d'enfoncement de l'extrémité (72) de l'absorbeur (7) dans le longeron (4), laquelle est au moins égale à la moitié de ladite plus grande dimension V0.

6. Structure d'absorption de chocs selon la revendication 5, où la direction transversale perpendiculaire à l'axe des cavités transversales est la direction de la plus grande dimension V0 de la section, **caractérisée en ce que** la composante V selon la direction transversale perpendiculaire à l'axe des cavités transversales du décalage entre lesdites deux cavités transversales de l'insert est supérieure à V0/4, de préférence encore supérieure à V0/2.

7. Structure d'absorption de chocs selon l'une quelconque des revendications 1 à 6, où lesdites parois longitudinales opposées de l'absorbeur sont verticales et où la plus grande dimension V0 de la section transversale de l'absorbeur est la hauteur H0,**caractérisée en ce que** la composante E selon la direction longitudinale du décalage entre les deux cavités transversales de l'insert est supérieure à H0/8, de préférence supérieure à H0/6 et la composante V selon la direction verticale du décalage entre lesdites deux cavités transversales de l'insert est supérieure à H0/4, de préférence H0/2.

8. Structure d'absorption de chocs selon l'une quelconque des revendications 3 à 7, dans laquelle l'absorbeur (7) est un profilé creux qui comprend trois chambres séparées les unes des autres par deux voiles internes horizontaux (73a et 73b), dans laquelle l'insert (30) comprend des zones massives (32a, 32b) qui entourent lesdites cavités transversales (31.1a et 31.1b), s'étendent de l'une à l'autre desdites faces opposées et qui sont reliées entre elles par une paroi mince en forme de U qui comprend deux portions de paroi horizontales (33a et 33b) reliées entre elle par une portion de paroi verticale (34) et dans laquelle, lors de l'insertion dudit insert à l'intérieur dudit absorbeur, lesdites portions de parois horizontales viennent au regard desdits voiles internes horizontaux de sorte que ladite paroi mince chevauche lesdits deux voiles internes horizontaux de l'absorbeur, ledit insert étant enfoncé jusqu'à ce que ladite portion de paroi verticale arrive en butée contre lesdits voiles internes horizontaux.

9. Structure d'absorption de chocs selon l'une quelconque des revendications 1 à 7, dans laquelle l'insert (30') comprend deux zones massives opposées (32'.1 et 32'.2), chaque zone massive (32'.1, resp. 32'.2) comprenant une desdites faces opposées (35'.1, resp. 35'.2).

## Patentansprüche

1. Stoßabsorbierende Struktur (10) für ein Fahrzeug, dessen Karosserie mindestens einen Längsträger (4) zum Halten eines Stoßfänger-Querträgers (6) aufweist, welcher Längsträger ein entlang der Längsachse des Fahrzeugs ausgerichtetes Hohlprofil ist und mindestens zwei gegenüberliegende Längswände (45.1 und 45.2) aufweist, wobei die stoßabsorbierende Struktur umfasst:
a. den Stoßfänger-Querträger,
b. mindestens einen Stoßabsorber (7), der zwischen dem Längsträger und dem Stoßfänger-Querträger angeordnet ist, welcher Stoßabsorber ein sich bei einem Stoß verformendes Hohlprofil ist, das mindestens zwei gegenüberliegende Längswände (75.1 und 75.2) aufweist, wobei ein Ende (72) des Profils in das offene Ende (5) des Längsträgers eingeführt wird, so dass die gegenüberliegenden Längswände des Stoßabsorbers den gegenüberliegenden Längswänden des Längsträgers zugewandt in deren Nähe zum Liegen kommen, wobei das Ende des Profils am Längsträger mithilfe von quer ausgerichteten Befestigungsmitteln (20a, 20b) senkrecht zu den gegenüberliegenden Längswänden des Stoßabsorbers und des Längsträgers befestigt ist,
c. ein Befestigungseinsatz (30) mit gegenüberliegenden Seiten (35.1 und 35.2), die, wenn der Einsatz im Stoßabsorber eingesetzt ist, den gegenüberliegenden Längswänden des Stoßabsorbers zugewandt in deren Nähe zum Liegen kommen,
**dadurch gekennzeichnet, dass** jede der gegenüberliegenden Seiten des Einsatzes mit nur zwei senkrecht zu diesen gegenüberliegenden Seiten (35.1 und 35.2) ausgerichteten Querhohlräumen (31.1a und 31.1b) versehen ist, die mit den Befestigungsmitteln zusammenwirken und zueinander versetzt sind, sowohl in Längsrichtung (L) als auch in Querrichtung (Z) senkrecht zur Achsrichtung (Y) der Querhohlräume.

2. Stoßabsorbierende Struktur nach Anspruch 1, **dadurch gekennzeichnet, dass** es sich bei den Querhohlräumen entweder um Hohlräume mit einem Schraubgewinde oder um Bohrungen zur Durchführung von Schraubbolzen handelt, die durch den Längsträger, den Stoßabsorber und den Einsatz führen.

3. Stoßabsorbierende Struktur nach Anspruch 1 oder 2, **dadurch gekennzeichnet, dass** die Querhohlräume einer der gegenüberliegenden Seiten mit den Querhohlräumen der jeweils anderen gegenüberliegenden Seite fluchten.

4. Stoßabsorbierende Struktur nach Anspruch 3, **dadurch gekennzeichnet, dass** die miteinander fluchtenden Querhohlräume ineinander übergehen, um eine Bohrung zu bilden, die von einer zur anderen der gegenüberliegenden Seiten durch den Einsatz führt.

5. Stoßabsorbierende Struktur nach irgendeinem der Ansprüche 1 bis 4, wobei der Querschnitt des Stoßabsorbers eine größere Abmessung V0 aufweist, **dadurch gekennzeichnet, dass** die Komponente E des Versatzes in Längsrichtung (L) zwischen den Querhohlräumen des Einsatzes größer als E0/4, besser noch größer als E0/3 ist, wobei E0 die Eintreiblänge des Endes (72) des Stoßabsorbers (7) in den Längsträger (4) ist, welche mindestens halb so groß ist wie die größere Abmessung V0.

6. Stoßabsorbierende Struktur nach Anspruch 5, wobei die Querrichtung senkrecht zur Achse der Querhohlräume die Richtung der größten Abmessung V0 des Querschnitts ist, **dadurch gekennzeichnet, dass** die Komponente V in Querrichtung senkrecht zur Achse der Querhohlräume des Versatzes zwischen den beiden Querhohlräumen des Einsatzes größer als V0/4, besser noch größer als V0/2 ist.

7. Stoßabsorbierende Struktur nach irgendeinem der Ansprüche 1 bis 6, wobei die gegenüberliegenden Längswände des Stoßabsorbers vertikal sind und wobei die größere Abmessung V0 des Querschnitts des Stoßabsorbers die Höhe H0 ist, **dadurch gekennzeichnet, dass** die Komponente E in Längsrichtung des Versatzes zwischen den beiden Querhohlräumen des Einsatzes größer als H0/8, vorzugsweise größer als H0/6 ist und die Komponente V in vertikaler Richtung des Versatzes zwischen den beiden Querhohlräumen des Einsatzes größer als H0/4, vorzugsweise größer als H0/2 ist.

8. Stoßabsorbierende Struktur nach irgendeinem der Ansprüche 3 bis 7, bei der der Stoßabsorber (7) ein Hohlprofil ist, welches drei, durch zwei horizontale Innenwandungen (73a und 73b) voneinander getrennte Kammern aufweist, bei der der Einsatz (30) massive Bereiche (32a, 32b) aufweist, welche die Querhohlräume (31.1a und 31.1b) umgeben, sich von einer zur anderen der gegenüberliegenden Seiten erstrecken und durch eine dünne U-förmige Wand miteinander verbunden sind, die zwei horizontale, durch einen vertikalen Wandabschnitt (34) miteinander verbundene Wandabschnitte (33a und 33b) aufweist, und bei der die horizontalen Wandabschnitte beim Einführen des Einsatzes in den Stoßabsorber den horizontalen Innenwandungen zugewandt zum Liegen kommen, so dass die dünne Wand die beiden horizontalen Innenwandungen des Stoßabsorbers überlappt, wobei der Einsatz so weit eingetrieben wird, bis der vertikale Wandabschnitt an den horizontalen Innenwandungen zum Anschlag kommt.

9. Stoßabsorbierende Struktur nach irgendeinem der Ansprüche 1 bis 7, bei der der Einsatz (30') zwei gegenüberliegende massive Bereiche (32'.1 und 32'.2) aufweist, wobei jeder massive Bereich (32'.1 bzw. 32'.2) eine der gegenüberliegenden Seiten (35'.1 bzw. 35'.2) aufweist.

## Claims

1. Impact-absorbing structure (10) for a vehicle, the structure of which comprises at least one side rail (4) intended to support a bumper crossbeam (6), said side rail being a hollow profile member arranged according to the longitudinal axis of said vehicle and having at least two opposing longitudinal walls (45.1 and 45.2), said impact-absorbing structure comprising:
a. said bumper crossbeam,
b. at least one absorber (7) placed between said side rail and said bumper crossbeam, said absorber being a hollow profile member intended to be deformed in the event of an impact, having at least two opposing longitudinal walls (75.1 and 75.2), one end (72) of said profile member being intended to be inserted into the open end (5) of said side rail such that said opposing longitudinal walls of said absorber are arranged facing and in the vicinity of said opposite longitudinal walls of the side rail, said end of said profile member being attached to said side rail using attachment means (20a, 20b) arranged transversely, perpendicular to said opposing longitudinal walls of the absorber and the side rail,
c. an attachment insert (30) provided with opposing surfaces (35.1 and 35.2) which, when said attachment insert is inserted into said absorber, are arranged facing and in the vicinity of said opposing longitudinal walls of the absorber,
**characterised in that** each of said opposing surfaces of the insert is provided with only two transverse recesses (31.1a and 31.1b) arranged perpendicular to said opposing surfaces (35.1 and 35.2), intended to engage with said attachment means, and offset relative to one another both in the longitudinal direction (L) and in the transverse direction (Z) perpendicular to the direction (Y) of the axis of said transverse recesses.

2. Impact-absorbing structure according to claim 1, **characterised in that** said transverse recesses are either recesses provided with a screwing thread, or bores intended for the insertion of bolts through either side of the side rail, the absorber and the insert.

3. Impact-absorbing structure according to claim 1 or 2, **characterised in that** the transverse recesses of one of said opposing surfaces are aligned with the transverse recesses of the other of said opposing surfaces.

4. Impact-absorbing structure according to claim 3, **characterised in that** said aligned transverse recesses join to form a bore through the insert from one or the other of said opposing surfaces.

5. Impact-absorbing structure according to any one of claims 1 to 4, where the cross-section of said absorber has a greatest dimension V0, **characterised in that** the component E of the offset along the longitudinal direction (L) between said transverse cavities of said insert is greater than E0/4, more preferably greater than E0/3, where E0 is the penetration length of the end (72) of the absorber (7) into the side rail (4), which is at least equal to half of said greatest dimension V0.

6. Impact-absorbing structure according to claim 5, where the cross-section perpendicular to the axis of the transverse recesses is the direction of the greatest dimension V0 of the cross-section, **characterised in that** the component V along the transverse direction perpendicular to the axis of the transverse recesses of the offset between the two transverse recesses of the insert is greater than V0/4, more preferably greater than V0/2.

7. Impact-absorbing structure according to any one of claims 1 to 6, where said opposing longitudinal walls of the absorber are vertical and where the greatest dimension V0 of the cross-section of the absorber is the height H0, **characterised in that** the component E along the longitudinal direction of the offset between the two transverse recesses of the insert is greater than H0/8, preferably greater than H0/6, and the component V along the vertical direction of the offset between said two transverse recesses of the insert is greater than H0/4, preferably H0/2.

8. Impact-absorbing structure according to any one of claims 3 to 7, wherein the absorber (7) is a hollow profile member which comprises three chambers separated from one another by two horizontal internal partitions (73a and 73b), wherein the insert (30) comprises solid areas (32a, 32b) surrounding said transverse recesses (31.1a and 31.1b), extending from one of said opposing surfaces to the other and which are interconnected by a thin U-shaped wall which comprises two horizontal wall portions (33a and 33b) interconnected by a vertical wall portion (34) and wherein, following the insertion of the insert into the absorber, said horizontal wall portions are arranged facing said horizontal internal partitions such that said thin wall overlaps with said two horizontal internal partitions of the absorber, said insert being inserted until said vertical wall portion comes to a stop against said horizontal internal partitions.

9. Impact-absorbing structure according to any one of claims 1 to 7, wherein the insert (30') comprises two opposing solid areas (32'.1 and 32'.2), each solid area (32'.1, or 32'.2) comprising one of said opposing surfaces (35'.1, or 35'.2).
